# EUROPEAN PATENT APPLICATION

(11) **EP 2 940 583 A2**
(43) Date of publication of application: **04.11.2015**
(21) Application number: 14175490.3
(22) Date of filing: 02.07.2014
(51) Int. Cl.: G06F 9/54, G06F 3/048

(54) **Remote operating system**

(30) Priority: 28.04.2014 TW 103207346
(71) Applicant: Giga-Byte Technology Co., Ltd., New Taipei City 231 (TW)
(72) Inventor: Lin, Yin Yu, New Taipei City 231 (TW); Lai, Yen Bo, New Taipei City 231 (TW)
(74) Representative: Cabinet Chaillot

(57) **Abstract**

A remote operating system includes a remote server (10), a computer device (20), and an operating device (30). The remote server (10) includes a first communication module (101) and a storage unit (103). The storage unit (103) electrically connects to the first communication module (101) and stores at least one macro (1031) and at least one shortcut application program (1033). The computer device (20) includes a transmission port (203) and a second communication module (201). The second communication module (201) electrically communicates with the first communication module (101) and receives the macro (1031) and/or the shortcut application program (1033) from the remote server (10). The operating device (30) includes an operating member (301) and a transmission interface (303). The operating member (301) is used to generate a control signal (3015). The transmission interface (303) electrically connects to the operating member (301) and the transmission port (203) so as to transmit the control signal (3015) to the computer device 20). When the transmission port (203) receives the control signal (3015), the computer device (20) responds to execute the macro (1031).

## Description

### TECHNICAL FIELD

This disclosure relates to a remote operating system and, more particularly, to a remote operating system for operations of computer peripheral devices.

### BACKGROUND ART

In a typical computer system, a keyboard and mouse are primarily the peripheral devices for operations. As computer operating systems, as well as computer games, advance constantly, the functions and operations to control the computer increase, and when the number of controls exceeds beyond some certain extent, a user or a computer game player is likely to find it flustered to operate on the peripheral devices. Hence, the peripheral devices, such as keyboards and mice, have been continuously improved, in functionality and structure, to increase user convenience.

As the computer system evolves, the peripheral devices, which would only accept input of characters and numerical information, have been designed to be more human-centered to accept versatile inputs. Most computer keyboards or mice of the current design are equipped with a shortcut key by which a corresponding software/program can be launched, or a specific function or operation is executed. The function or the operation corresponding to the shortcut key can be defined and recorded by a shortcut application program.

The function or the operation of a shortcut key is user definable for different requirements, and the shortcut key corresponds to a macro, which may include a series of operations to be executed. Once a shortcut key on the keyboard or the mouse is set, the users or the game players can invoke the macro by pressing the shortcut key. However, the setting of shortcut keys is dependent on the keyboard or the mouse. That is, when using a different computer, the users or the game players have to bring the keyboard or the mouse and the shortcut key application program, install the program into the computer, and set up a macro corresponding to the shortcut key. What is needed is an easy and convenient way to streamline the operations.

### SUMMARY OF THE INVENTION

This disclosure provides a remote operating system for operations of computer peripheral devices so that it is not necessary for a user to carry any shortcut key application program to be re-installed for setting up a macro corresponding to the shortcut key, an operation which otherwise may cause a user inconvenience.

The remote operating system includes a remote server, a computer device, and an operating device. The remote server includes a first communication module and a storage unit, where the storage unit electrically connects to the first communication module and stores at least one macro and at least one shortcut application program. The computer device includes a transmission port and a second communication module. The second communication module electrically connects to the first communication module of the remote server and receives the macro and/or the shortcut application program from the remote server. The operating device includes an operating member and a transmission interface. The operating member is used to generate a control signal. The transmission interface electrically connects to the operating member and the transmission port of the computer device, and is used to transmit the control signal to the computer device. When the transmission port receives the control signal, the computer device responds to execute the macro.

In one embodiment, the operating device further includes a memory unit and a control unit. The control unit electrically connects to the operating member, the transmission interface, and the memory unit. The memory unit is used for storing the macro.

In one embodiment, the macro may be an instruction, a key setting, or a series of plural instructions.

In one embodiment, the shortcut application program may be a macro editing software responsive to the operating member, and is used for editing the macro.

In one embodiment, the operating member may be a key, button, scroll wheel, function key, numeral key, direction key, or shortcut key.

In one embodiment, the operating device may be a mouse, keyboard, or stylus pen.

In one embodiment, the transmission interface and the transmission port may respectively comply with a USB or IEEE transmission interface.

In one embodiment, the first communication module and the second communication module may respectively be a Wi-Fi transceiver, fiber-optic transceiver, network transceiver, or cable transceiver.

In one embodiment, the remote operating system further includes a handheld electronic device, where the handheld electronic device is provided with a third communication module for communicating with the remote server in wireless fashion.

In one embodiment, the handheld electronic device may be a smartphone, tablet PC, or PDA.

In one embodiment, the remote server may be a file server, an application server, or a cloud server.

### BRIEF DESCRIPTION OF DRAWINGS

The structure as well as a preferred mode of use, further objects, and advantages of this disclosure will be best understood by referring to the following detailed description of some illustrative embodiments in conjunction with the accompanying drawings, in which:
FIG. 1 is a block diagram of a remote operating system;
FIG. 2 is a block diagram of another remote operating system;
FIG. 3 is a schematic view showing an illustrative remote operating system according to the first embodiment of the disclosure; and
FIG. 4 is a schematic view showing an illustrative remote operating system according to the second embodiment of the disclosure.

### DETAILED DESCRIPTION OF THE PREFERRED EMBODIMENTS

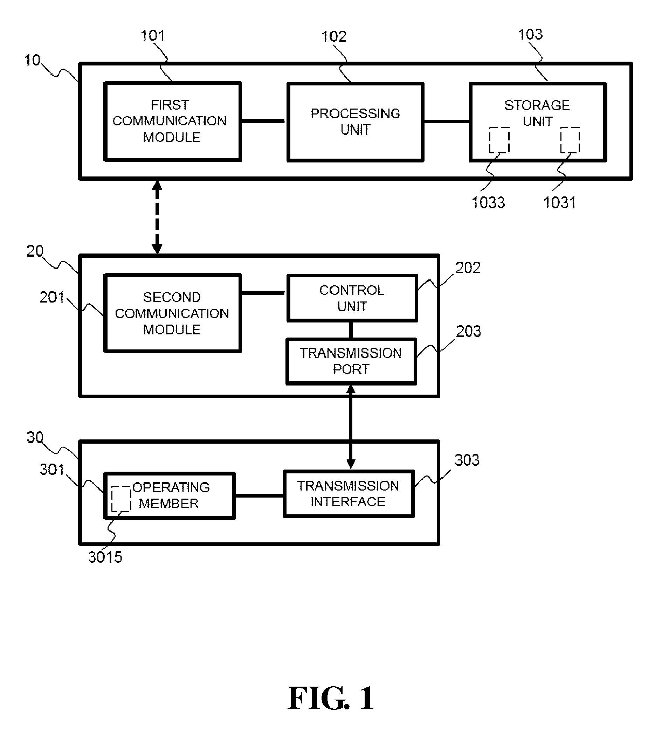

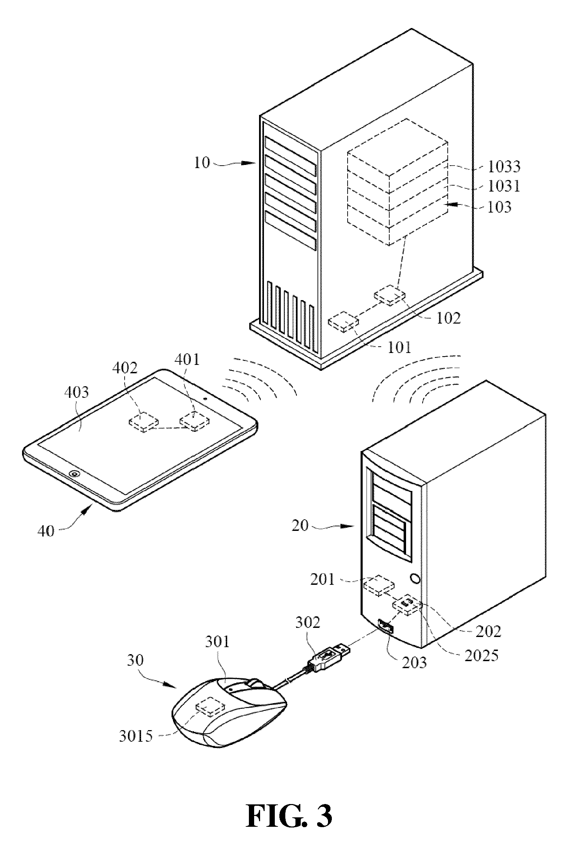

Referring to FIG. 1 and FIG. 3, a remote operating system according to a first embodiment includes a remote server 10, a computer device 20, and an operating device 30. The remote server 10 includes a first communication module 101 and a storage unit 103. The storage unit 103 electrically connects to the first communication module 101 and stores at least one macro 1031 and at least one shortcut application program 1033. The macro 1031, for example, may be an instruction, a key setting, or a series of plural instructions. The shortcut application program 1033 may be a macro editing software responsive to the operating member 301 of the operating device 30, and is used for editing the macro 1031. In the present embodiment, the remote server 10 further includes a processing unit 102, for example, a central processing unit (CPU), electrically connecting to the first communication module 101 and the storage unit 103, for controlling the first communication module 101 and the storage unit 103.

The computer device 20 includes a transmission port 203 and a second communication module 201. The second communication module 201 electrically connects to the first communication module 101 of the remote server 10. In the present embodiment, the computer device 20 further includes a control unit 202, for example, a CPU, electrically connecting to the second communication module 201 and the transmission port 203, for controlling the second communication module 201 and/or the transmission port 203.

The operating device 30 includes an operating member 301 and a transmission interface 303. The operating member is used to generate a control signal 3015. The transmission interface 303 electrically connects to the operating member 301 and the transmission port 203 of the computer device 20, and is used to transmit the control signal 3015 to the computer device 20. When the transmission port 203 receives the control signal 3015, the computer device 20 responds to execute the macro 1031 and the shortcut application program 1033, which are stored in the remote server 10.

The remote server 10, as shown in FIG. 3, may be, for example, a file server, an application server, and/or a cloud server. The first communication module 101 and the second communication module 201 may correspond to a Wi-Fi transceiver, a network transceiver, a fiber-optic transceiver, or a cable transceiver, by which the first communication module 101 electrically connects to the second communication module 201 in wired or wireless fashion. The computer device 20 may be, but not limited to a desktop PC, for example, a laptop PC, tablet PC, or smartphone. The operating device 30 may be, but not limited to a mouse, and may be, for example, a keyboard or stylus pen. The operating member 301 of the operating device 30 may be, but not limited to a button or scroll wheel. In the present embodiment, a button 301 is used (as shown in FIG. 3). The transmission port 203 and the transmission interface 303 may comply with, but not limited to a USB or an IEEE transmission interface.

When a user works on the operating device 30, the operating member 301 is operated to generate a control signal 3015. The control signal 3015 is sent to the transmission port 203 via the transmission interface 303. After receiving the control signal 3015, the control unit 202 of the computer device 20 responds to generate an operation instruction 2025 so as for the second communication module 201 to connect to the first communication module 101 and receive the macro 1031 and/or the shortcut application program 1033 from the remote server 10. The control unit 202 of the computer device 20 then executes the macro 1031 and/or the shortcut application program 1033.

Through aforementioned operations of this disclosure, it is not necessary for a user to carry any shortcut application program 1033 and set up a macro 1031. Instead, the user can use the operating device 30, for example, a mouse, through which the shortcut application program 1033 and/or the macro 1031 are downloaded into the computer device 20 from the remote server 10 and executed in the computer device 20, thereby greatly increasing user convenience.

The foregoing embodiment is illustrative of the technical concepts and characteristics of the present disclosure. With the disclosed remote operating system, the macro 1031 and/or the shortcut application program 1033 are stored in a remote server 10, and therefore it is not necessary for the user to carry any shortcut application program and set up any macro. More embodiments of this disclosure are recited in the paragraphs that follow.

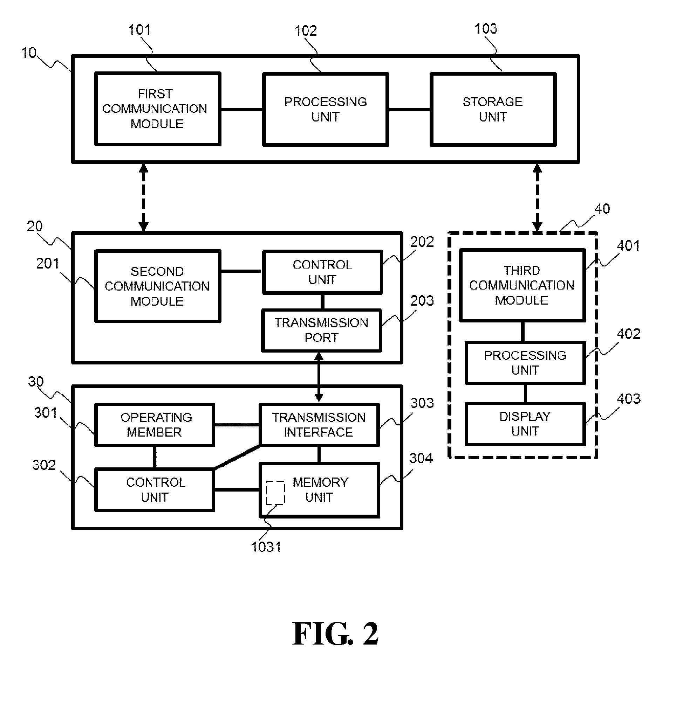

FIG. 2 is a block diagram of another remote operating system. Referring to FIG. 2, with further reference to FIG. 3, the operating device 30 (a mouse, as indicated in FIG. 3) further includes a memory unit 304 and a control unit 302. The control unit 302 electrically connects to the operating member 301, the transmission interface 303, and the memory unit 304. The memory unit 304 is used to store at least one macro 1031 from the remote server 10, where the memory unit 304 may be an EEPROM or a flash memory. The control unit 302 may be, for example, a microcontroller unit (MCU). The control unit 302 of the operating device 30 controls the transmission interface 303 to transmit the macro 1031, which is stored in the operating device 30, to the computer device 20 or other computer devices. Hence, when a user wants to use the operating device 30 on another computer device (not shown), the user does not have to edit the macro 1031 again; instead, the user simply operates the operating device 30 to transmit the macro 1031, stored in the operating device 30, to the computer device. The macro 1031 stored in the operating device 30 can also be used as a backup if the macro 1031 stored in the remote server 10 is lost. Moreover, the user can edit the macro 1031 and sync up the macro 1031 between the remote server 10 and the operating device 30, as long as the computer device 20 is in communication with the remote server 10.

With further reference to FIG. 2 and FIG. 3, the remote operating system further includes a handheld electronic device 40 (shown in a dash frame). The handheld electronic device 40 may be, for example, a tablet PC (as shown in FIG. 3) or PDA. More specifically, the handheld electronic device 40 includes a third communication module 401, a processing unit 402, and a display unit 403. The third communication module 401 communicates with the remote server 10 in wired or wireless fashion. For example, in one embodiment, the third communication module 401 and the first communication module 101 respectively correspond to a Wi-Fi or 3G transceiver. The first communication module 101 wirelessly communicates with the third communication module 401, or the remote server 10 may include another communication module (not shown) to wirelessly communicate with the third communication module 401. The processing unit 402 electrically connects to, and controls, the third communication module 401 and the display unit 403. The processing unit 402 controls the third communication module 401 to receive the macro 1031 and/or the shortcut application program 1033, which are stored in the storage unit 103 of the remote server 10. The display unit 403 may be, for example, a screen. The processing unit 402 of the handheld electronic device 40 controls the display unit 403 to display the contents of macro editing. The user can download the shortcut application program 1033 into the handheld electronic device 40 and edit the macro 1031. The processing unit 402 then uploads the edited macro 1031 to the storage unit 103 of the remote server 10. Through the operations of the handheld electronic device, the macro 1031 can be edited and synced up between the handheld electronic device 40 and the remote server 10.

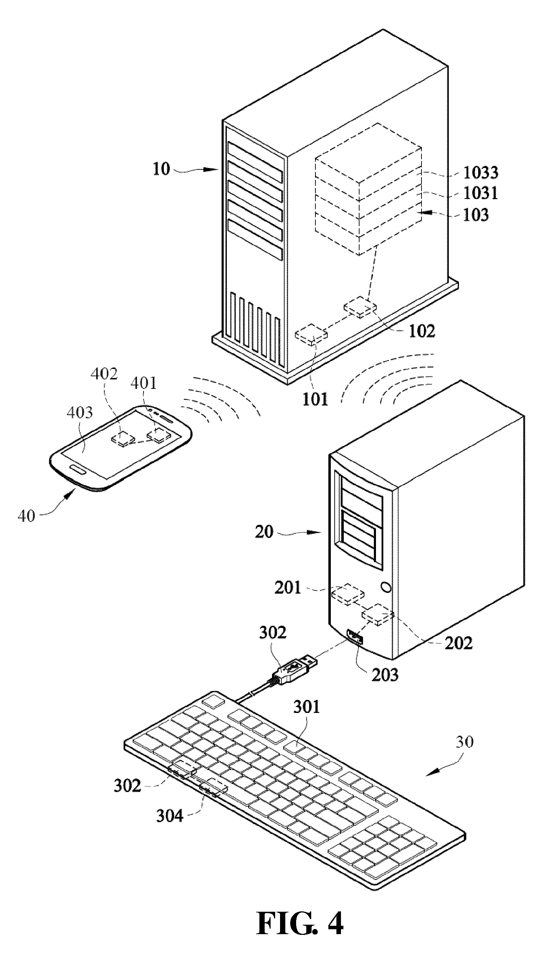

FIG. 4 is a schematic view showing an illustrative remote operating system according to the second embodiment of the disclosure. The operating device 30 in the above mentioned examples is based on, but not limited to a mouse. Referring to FIG. 4, for example, the operating device 30 is a keyboard, and the handheld electronic device 40 is a smartphone. The operating member 301 is a key, for example, a special key, numeral key, direction key, or shortcut key.

## Claims

1. A remote operating system, **characterized by** comprising:
a remote server (10), including a first communication module (101) and a storage unit (103), said storage unit (103) electrically connecting to said first communication module (101) and storing at least one macro (1031) and at least one shortcut application program (1033);
a computer device (20), including a transmission port (203) and a second communication module (201), said second communication module (201) electrically communicating with said first communication module (101) of said remote server (10) and receiving the macro (1031) and/or the shortcut application program (1033) from said remote server (10); and
an operating device (30), including an operating member (301) and a transmission interface (303), said operating member (301) serving to generate a control signal (3015), said transmission interface (303) electrically connecting to said operating member (301) and said transmission port (203) of said computer device (20) and
serving to transmit said control signal (3015) to said computer device (20).

2. The remote operating system as of claim 1, **characterized in that** said operating device (30) further comprises a memory unit (304) and a control unit (302), and said control unit (302) electrically connects to said operating member (301), said transmission interface (303), and said memory unit, and said memory unit (304) stores the macro (1031).

3. The remote operating system as of claim 1, **characterized in that** the macro (1031) is selected from the group consisting of an instruction, a key setting, and a series of plural instructions.

4. The remote operating system as of claim 1, **characterized in that** the shortcut application program (1033) is a macro editing software responsive to said operating member (301).

5. The remote operating system as of claim 1, **characterized in that** said operating member (301) is selected from the group consisting of a key, a button, a scroll wheel, a function key, a numeral key, a direction key, and a shortcut key.

6. The remote operating system as of claim 1, **characterized in that** said operating device (30) is selected from the group consisting of a mouse, a keyboard, and a stylus pen.

7. The remote operating system as of claim 1, **characterized in that** said transmission interface (303) and said transmission port (203) respectively correspond to a USB transmission interface or an IEEE transmission interface.

8. The remote operating system as of claim 1, **characterized in that** said first communication module (101) and said second communication module (201) respectively correspond to a transceiver selected from the group consisting of a Wi-Fi transceiver, a fiber-optic transceiver, a network transceiver, and a cable transceiver.

9. The remote operating system as of claim 1, **characterized by** further comprising a handheld electronic device (40) provided with a third communication module (401) wirelessly communicating with said remote server (10).

10. The remote operating system as of claim 9, **characterized in that** said handheld electronic device (40) is selected from the group consisting of a smartphone, a tablet PC, and a PDA.

11. The remote operating system as of claim 1, **characterized in that** said remote server (10) is selected from the group consisting of a file server, an application server, and a cloud server.
